# EUROPEAN PATENT APPLICATION

(11) **EP 3 450 943 A1**
(43) Date of publication of application: **06.03.2019**
(21) Application number: 18190390.7
(22) Date of filing: 23.08.2018
(51) Int. Cl.: G01J 5/04, G08B 13/191, G08B 13/193

(54) **INFRARED DETECTOR**

(30) Priority: 31.08.2017 JP 2017168044
(71) Applicant: Panasonic Intellectual Property Management Co., Ltd., Osaka-shi, Osaka 540-6207 (JP)
(72) Inventor: TOYODA, Ichiro, Osaka-shi, Osaka 540-6207 (JP)
(74) Representative: Müller-Boré & Partner Patentanwälte PartG mbB

(57) **Abstract**

An object would be to propose an infrared detector capable of reducing occurrence of false detection due to flow of gas. The infrared detector (100) includes: an infrared sensor (2); a circuit board (111); a cover (7); and an infrared transmitting member (3). The circuit board (111) includes a front surface (1111) and the infrared sensor (2) is mounted on the front surface (1111). The cover (7) faces the front surface (1111) of the circuit board (111) and includes an exposing hole (70) exposing the infrared sensor (2). The infrared transmitting member (3) covers the exposing hole (70). The circuit board (111), the cover (7), and the infrared transmitting member (3) form an accommodation space (S10) enclosing the infrared sensor (2) therein.

## Description

### Technical Field

The present invention generally relates to infrared detectors, and particularly relates to an infrared detector with one or more infrared sensors.

### Background Art

Document 1 (JP 2009-129693 A) discloses a heat-ray sensor attached automatic switch (infrared detector). The heat-ray sensor attached automatic switch of Document 1 includes: a low current substrate (circuit board) where a heat-ray sensor (infrared sensor) is mounted; a high current substrate where electric cable connection terminals are mounted; a housing; and a lens block (infrared transmitting member). The housing is provided with a window hole (exposing hole) allowing heat rays entering the heat-ray sensor to pass therethrough, and accommodates the low current substrate and the high current substrate both. The lens block includes a lens converging heat rays from a detection area to a light receiving surface of the heat-ray sensor and the lens block is supported on the housing to close the window hole.

In the heat-ray sensor attached automatic switch of Document 1, the housing includes a body (cover) which is fixed such that an outer surface directed upward is in contact with a ceiling surface when the housing is embedded. Inside the housing, a partition protrusion protruded from an inner surface of the housing, the low current substrate, and the high current substrate form a partition partitioning a space where the infrared sensor is present, from a space above the body, to prevent flow of gas. In contrast, there is no configuration which partitions the space where the infrared sensor is present, from a space beneath the body, to prevent flow of gas.

An object of the present disclosure would be to propose an infrared detector capable of reducing occurrence of false detection due to flow of gas.

### Summary of Invention

An infrared detector of one aspect according to the present disclosure includes: an infrared sensor; a circuit board; a cover; and an infrared transmitting member. The circuit board includes a front surface where the infrared sensor is mounted. The cover faces the front surface of the circuit board and includes an exposing hole exposing the infrared sensor. The infrared transmitting member covers the exposing hole. The circuit board, the cover, and the infrared transmitting member form an accommodation space enclosing the infrared sensor therein.

### Brief Description of Drawings

FIG. 1 is a perspective view of an infrared detector of one embodiment according to the present disclosure.
FIG. 2 is a front view of the infrared detector of the above.
FIG. 3 is an exploded perspective view of the infrared detector of the above.
FIG. 4 relates to the infrared detector of the above, and is an exploded perspective view thereof wherein a decorative cover, a terminal cover, screws, clamping metal parts, and others are detached.
FIG. 5 is a front view of primary part of the infrared detector of the above.
FIG. 6 is a section taken along line X-X of FIG. 5.
FIG. 7 is a section taken along line Y-Y of FIG. 5.
FIG. 8 is a rear view of the primary part of the infrared detector of the above.
FIG. 9 relates to the infrared detector of the above, and is a section taken along line A-A of FIG. 2.
FIG. 10 relates to the infrared detector of the above, and is a section taken along line B-B of FIG. 2.
FIG. 11 relates to the infrared detector of the above, and is a perspective view thereof wherein infrared transmitting members, the decorative cover, a light shielding plate, and others are detached.
FIG. 12 relates to the infrared detector of the above, and is a perspective view thereof wherein the infrared transmitting members and the light shielding plate are detached.
FIG. 13 is a rear perspective view of a first infrared transmitting member of the infrared detector of the above.
FIG. 14 is a rear perspective view of a second infrared transmitting member of the infrared detector of the above.
FIG. 15 is a front perspective view of a cover of the infrared detector of the above.
FIG. 16 is a rear perspective view of the cover of the infrared detector of the above.
FIG. 17 is a partially enlarged view of FIG. 5.
FIG. 18 is a partially enlarged view of FIG. 7.
FIG. 19A is a plan view of the light shielding plate used in the infrared detector of the above.
FIG. 19B is a front view of the light shielding plate used in the infrared detector of the above.
FIG. 19C is a bottom view of the light shielding plate used in the infrared detector of the above.
FIG. 20 is an explanatory view of the detection area of the infrared detector of the above.
FIG. 21A is an explanatory view of how to assemble the infrared detector of the above.
FIG. 21B is another explanatory view of how to assemble the infrared detector of the above.

### Description of Embodiments

### (EMBODIMENT)

### (1) OUTLINE

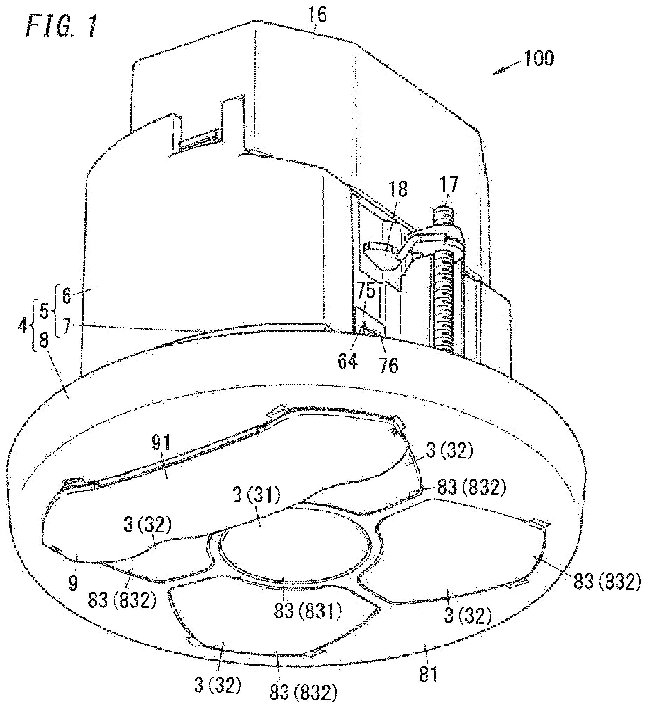

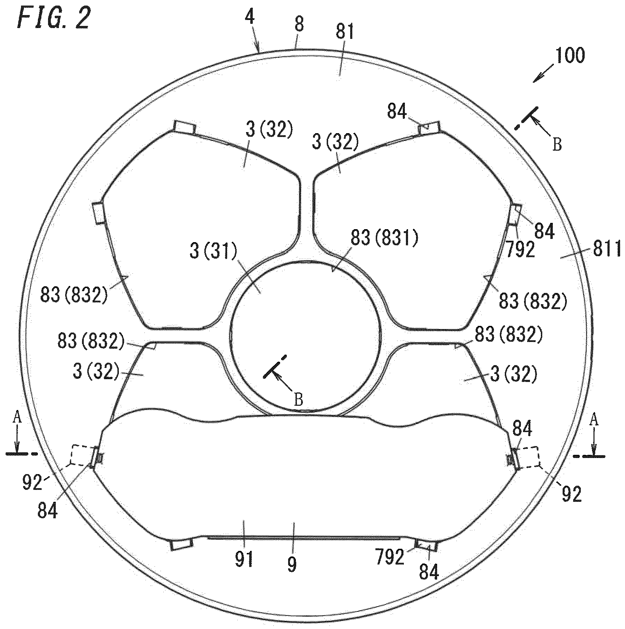

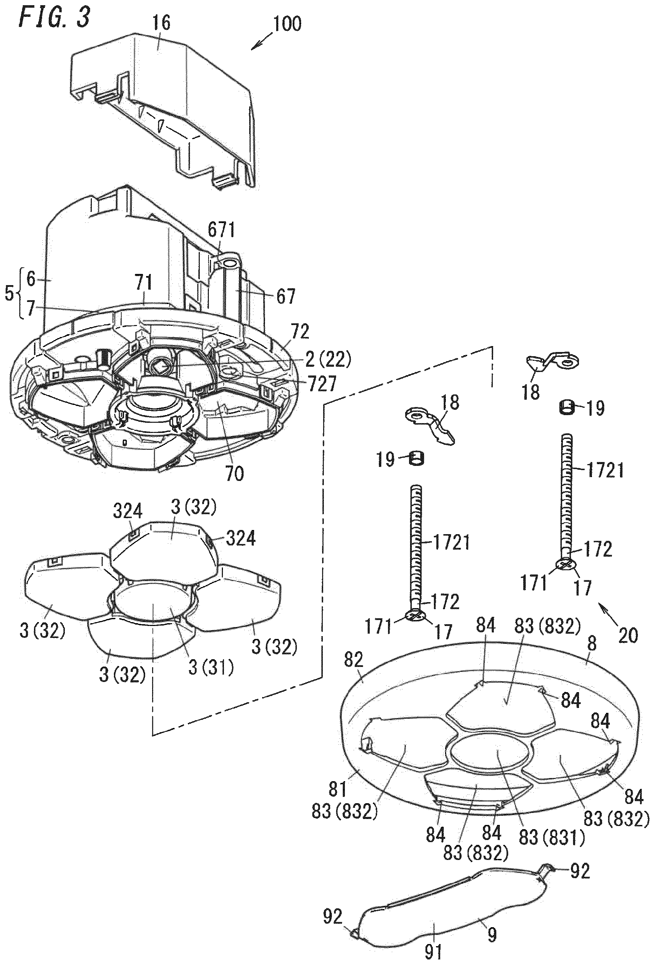

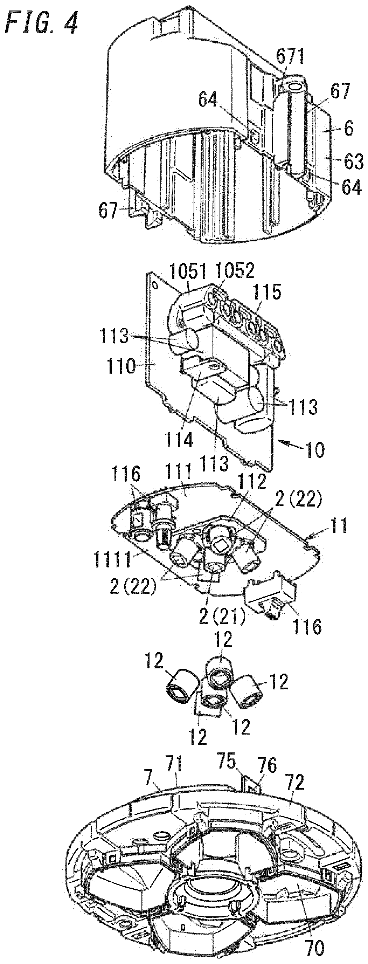

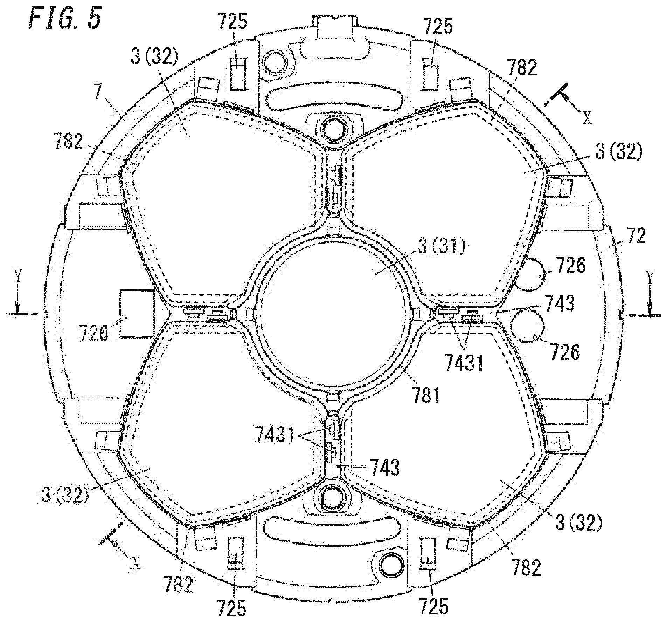

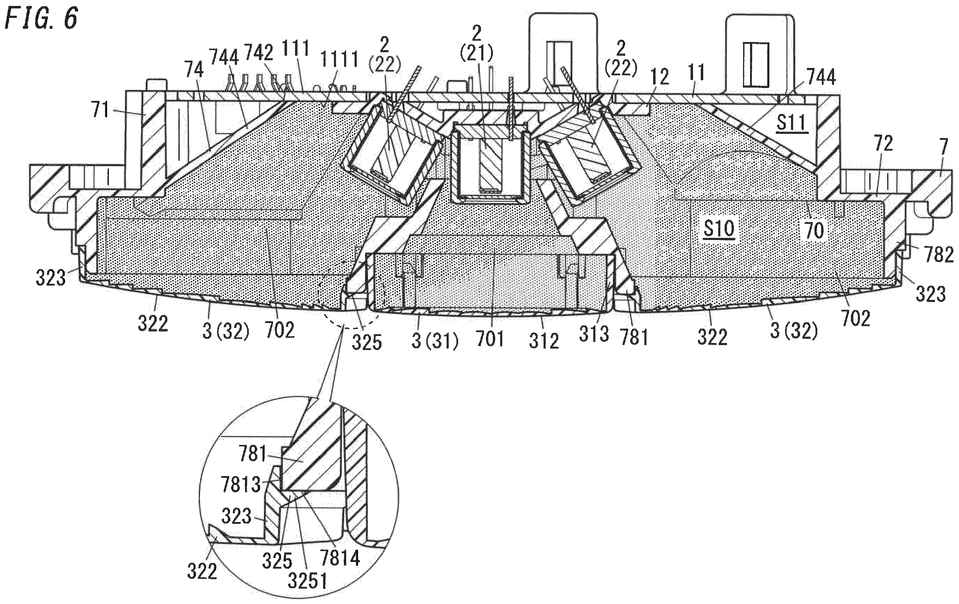

FIG. 1 and FIG. 2 illustrate an infrared detector 100 of the present embodiment. As shown FIG. 3 and FIG. 4, the infrared detector 100 includes a plurality of (five) infrared sensors 2, a circuit board 111, a cover 7, and a plurality of (five) infrared transmitting members 3. As shown in FIG. 4, the circuit board 111 includes a front surface (first surface) 1111 and the plurality of infrared sensors 2 are mounted on the front surface 1111. As shown in FIG. 4, the cover 7 faces the front surface 1111 of the circuit board 111 and includes an exposing hole 70 exposing the plurality of infrared sensors 2. As shown in FIG. 5, the plurality of infrared transmitting members 3 cover the exposing hole 70. In the infrared detector 100, as shown in FIG. 6 to FIG. 8, the circuit board 111, the cover 7, and the plurality of infrared transmitting member 3 form an accommodation space S10 enclosing the plurality of infrared sensors 2 therein.

Generally, the infrared detector 100 is attached to a building surface (e.g., a ceiling and a wall) of a building. In the building, flow of gas may occur, and such flow of gas may cause thermal variation. The infrared detector 100 includes the infrared sensors 2 and therefore may make false detection due to thermal variation. However, the infrared detector 100 accommodates the infrared sensors 2 in the accommodation space S 10, and thus can reduce influence of flow of gas. Accordingly, the infrared detector 100 is capable of reducing occurrence of false detection due to flow of gas. Especially, in the infrared detector 100, components forming the accommodation space S10 include the cover 7 including the exposing hole 70 for exposing the infrared sensors 2 and the infrared transmitting members 3 covering this exposing hole 70. Consequently, it may be also possible to protect the infrared sensors 2 from gas flowing from front of the infrared detector 100.

### (2) ENTIRE STRUCTURE OF INFRARED DETECTOR

Hereinafter, the infrared detector 100 of the embodiment is described with reference to FIGS. 1 to FIG. 20, FIG. 21A and FIG. 21B.

The infrared detector 100 of the present embodiment is used to detect a heat source (e.g., a human) in a detection area. The infrared detector 100 is an infrared human detector for performing human detection within the detection area.

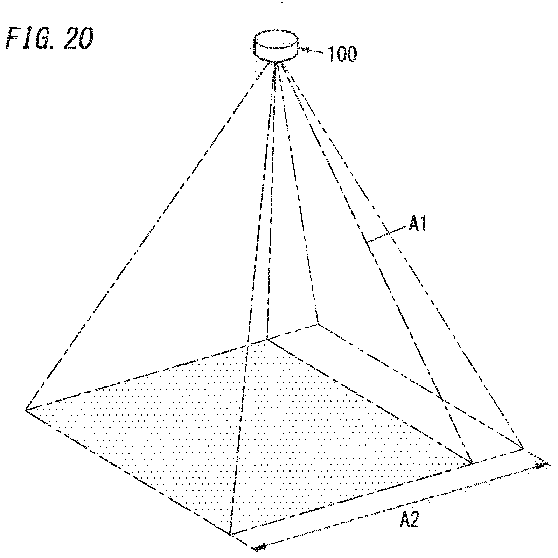

As shown in FIG. 1 to FIG. 4, the infrared detector 100 includes a plurality of (five) infrared sensors 2 (see FIG. 4), a plurality of (five) infrared transmitting members 3, a housing 4, and a light shielding plate 9. The plurality of infrared transmitting members 3 are arranged one by one in front of the plurality of infrared sensors 2. The housing 4 accommodates the plurality of infrared sensors 2, and supports the plurality of infrared transmitting members 3. The light shielding plate 9 shields infrared light. The light shielding plate 9 is placed to cover each of two infrared transmitting members 3 of the plurality of infrared transmitting members 3. Accordingly, the detection area of the infrared detector 100 is than a detection area in a condition where the light shielding plate 9 is detached from the infrared detector 100 (hereinafter, referred to as a predetermined detection area, if necessary). In the present embodiment, the predetermined detection area may be a maximum detection area. The predetermined detection area is determined by an infrared receiver unit that includes the plurality of infrared sensors 2 and the plurality of infrared transmitting members 3. In other words, the predetermined detection area is considered as a combined detection area formed by five single detection areas. Each single detection area is determined by a corresponding one of sets of the plurality of infrared sensors 2 and the plurality of infrared transmitting members 3 which are associated with each other one by one. The predetermined detection area has a four sided pyramid shape. The detection area of the infrared detector 100 of the present embodiment has a four-sided oblique pyramid shape. FIG. 20 is an explanatory view of the detection area of the infrared detector 100, and "A2" indicates the detection area in a condition where no light shielding plate 9 is placed, and "A1" indicates the detection area in a condition where the light shielding plate 9 is placed. Actually, the detection area is not visible.

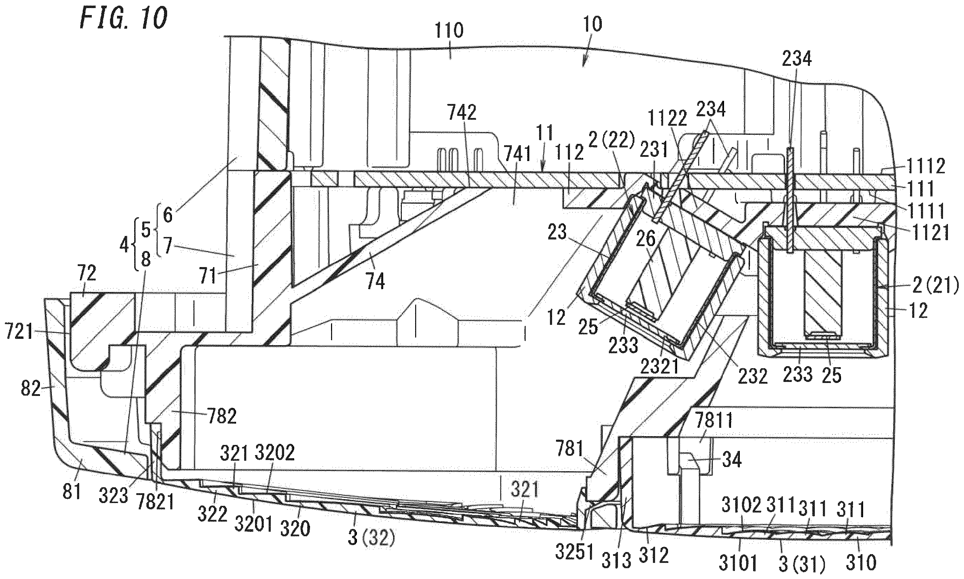

Additionally, the infrared detector 100 includes a power supply circuit module 10 (see FIG. 4 and FIG. 10). Further, the infrared detector 100 includes a sensor module 11 (see FIG. 4 and FIG. 10) which includes the plurality of infrared sensors 2. The power supply circuit module 10 converts an AC voltage supplied from an external power supply (e.g., a commercial power supply) into a desired DC voltage and supplies it to the sensor module 11. The power supply circuit module 10 and the sensor module 11 are accommodated in the housing 4.

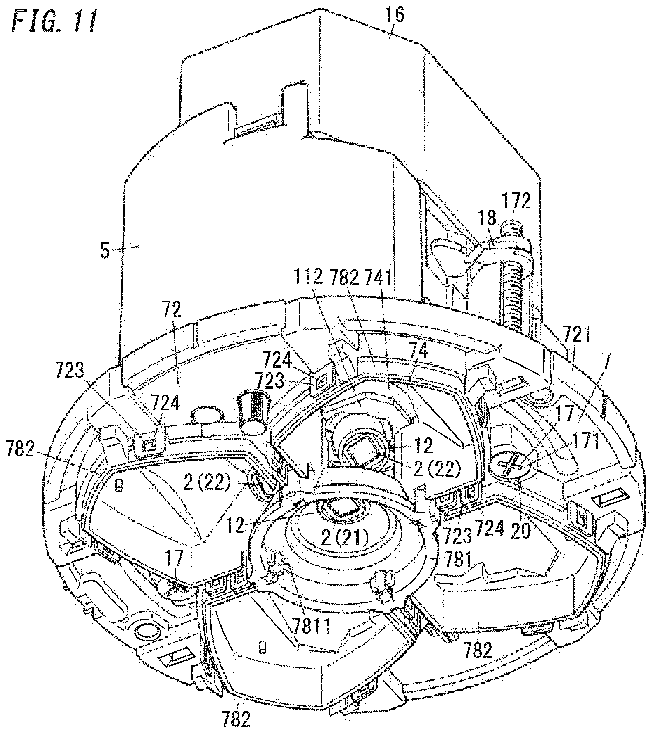

Moreover, the infrared detector 100 includes an attachment device 20 (see FIG. 3 and FIG. 11) which is used to attach the infrared detector 100 to an exposed attachment cover, for example. The exposed attachment cover may be attached to a ceiling material, a metal round exposed box, a resin round exposed box, a metal molding, a raceway, an embedded box, or the like, for example.

### (3) INDIVIDUAL COMPONENTS OF INFRARED DETECTOR

### (3.1) INFRARED SENSOR

As shown in FIG. 10, the infrared sensor 2 includes a pyroelectric device 25, a mounting substrate 26, and a package 23.

The pyroelectric device 25 is a quad type pyroelectric device including a single pyroelectric material substrate where four detectors are arranged in two-by-two array (matrix). Each of the four detectors is a capacitor which includes a first electrode placed on a first surface of a pyroelectric material substrate, a second electrode placed on a second surface opposite from the first surface, and part of the pyroelectric material substrate interposed between the first electrode and the second electrode. The first electrode is made of an electric conductive film (e.g., NiCr films) with properties of absorbing infrared light. An optical axis of the infrared sensor 2 is defined as a normal line at a center of a square including the individual light receiving surfaces of the four detectors when the pyroelectric device 25 is viewed in a thickness direction thereof. When receiving infrared light, the pyroelectric device 25 outputs a current signal depending on a change in amount of infrared light received.

Each infrared sensor 2 further includes a signal processing unit for performing signal processing on an output signal from the pyroelectric device 25. The signal processing unit includes one or more IC devices (IC: Integrated Circuit). The signal processing unit includes a current-voltage conversion circuit, a voltage amplification circuit, a determination circuit, and an output circuit. The current-voltage conversion circuit includes a circuit for converting a current signal which is an output signal outputted from the pyroelectric device 25, into a voltage signal. The voltage amplification circuit includes a circuit for amplifying components with frequencies within a predetermined frequency range (e.g., 0.1 Hz to 10 Hz) included in the voltage signal outputted from the current-voltage conversion circuit. The voltage amplification circuit has a bandpass filter function. The bandpass filter function includes a function of allowing components of the predetermined frequency range of the voltage signal outputted from the current-voltage conversion circuit to pass, but removing undesired frequency components considered as noise. The determination circuit includes a circuit for comparing the voltage signal outputted from the voltage amplification circuit with a threshold value predetermined, and determining whether or not a voltage level of the voltage signal goes across a border defined by the threshold value. In more detail, for example, the determination circuit includes a window comparator configured to output the output signal with an "L" level when the voltage level of the voltage signal goes across a border defined by a first threshold value (i.e., the voltage level becomes larger than the first threshold value) or when the voltage level goes across a border defined by a second threshold value smaller than the first threshold value (i.e., the voltage level becomes smaller than the second threshold value). The window comparator is also configured to output the output signal with an "H" level while the voltage level does not go across the borders defined by the first threshold value and the second threshold value (i.e., the voltage level is kept in a range between the first threshold value and the second threshold values). The output circuit includes a circuit for outputting a human body detection signal as its output signal when it is determined that the voltage level go across the border defined by the threshold.

The pyroelectric device 25 and the signal processing unit are mounted on the mounting substrate 26. The mounting substrate 26 may be a molding substrate, for example.

The package 23 is a package commonly named "Can Package". The can package may be called "Metal Package" in some cases. The package 23 includes a base 231, a cap 232, a window member 233, and a plurality of lead terminals 234 (only two of them are illustrated in FIG. 10).

The base 231 is electrically conductive. In this regard, the base 231 is made of metal. The base 231 has a disk shape, and supports, on its side in its thickness direction, the mounting substrate 26.

The cap 232 is electrically conductive. In this regard, the cap 232 is made of metal. The cap 232 has a hollow cylindrical shape with a bottom, and is fixed to the base 231 to cover the mounting substrate 26 and the pyroelectric device 25.

The window member 233 is a member with infrared light transmitting properties. The window member 233 is electrically conductive. In this regard, the window member 233 includes a silicon substrate, for example. The window member 233 includes, in addition to the silicon substrate, an infrared optical filter on this silicon substrate. The infrared optical filter includes optical multilayer film which transmits infrared light in a range of wavelengths which can be detected by the infrared detector 100.

The window member 233 is placed to block a window hole 2321 formed in a front wall of the cap 232. The window member 233 is bonded to the cap 232 with electrically conductive material, thereby electrically coupled with the cap 232. The window member 233 is positioned in front of the light receiving surface of the pyroelectric device 25.

Three lead terminals 234 are held by the base 231. The three lead terminals 234 each have a pin shape. The three lead terminals 234 each penetrate the base 231 in the thickness direction of the base 231. The three lead terminals 234 include a power supply lead terminal, a signal output lead terminal, and a ground lead terminal.

### (3.2) SENSOR MODULE

As shown in FIG. 4 and FIG. 10, the sensor module 11 includes the plurality of infrared sensors 2, a circuit board 111, a control circuit, and a spacer 112.

The circuit board 111 is a printed circuit substrate. The circuit board 111 includes a first surface (front surface) 1111 across a thickness direction thereof, and a second surface (rear surface) 1112 on an opposite side thereof from the first surface 1111. In the sensor module 11, the infrared sensors 2 are arranged on the first surface 1111 of the circuit board 111 so that four infrared sensors 2 (hereinafter, referred to as "second infrared sensors 22" in some cases) surrounds one infrared sensor 2 (hereinafter, referred to as a "first infrared sensor 21" in some cases). In more detail, on the first surface 1111 of the circuit board 111, the four second infrared sensors 22 are arranged on one imaginary circle at almost regular intervals and the first infrared sensor 21 is positioned at a center of the imaginary circle. In a different point of view, in the sensor module 11, on the first surface 1111 of the circuit board 111, the four second infrared sensors 22 are positioned one-by-one at four corners of an imaginary square, and the first infrared sensor 21 is positioned at a center of the imaginary square. As described above, the infrared sensors 2 are mounted on the front surface 1111 of the circuit board 111.

The optical axis of the first infrared sensor 21 is perpendicular to the first surface 1111 of the circuit board 111. In this sentence, the word "perpendicular" is not used to mean only "crossing at a strict right angle" but is used to mean "almost perpendicular (crossing at an angle of 90° ± 5°)". The optical axes of the plurality of second infrared sensors 22 are oblique to the first surface 1111 of the circuit board 111. The optical axes of the plurality of second infrared sensors 22 cross the optical axis of the first infrared sensor 21 at the same angle. Further, the plurality of second infrared sensors 22 are mounted on the circuit board 111 so that the optical axes of the plurality of second infrared sensors 22 are inclined from the optical axis of the first infrared sensor 21 in individual different directions.

The spacer 112 is positioned between the circuit board 111 and the five infrared sensors 2 (the base 231 of the package 23 thereof). The spacer 112 includes a first spacer portion 1121 positioned between the first infrared sensor 21 and the circuit board 111, and four second spacer portions 1122 each positioned between a corresponding one of the four second infrared sensors 22 and the circuit board 111.

The first spacer portion 1121 includes a surface facing the base 231 of the first infrared sensor 21, wherein the surface is perpendicular to the optical axis of the first infrared sensor 21 and is parallel to the first surface 1111 of the circuit board 111. Each of the second spacer portions 1122 includes a surface facing the base 231 of the corresponding second infrared sensor 22, wherein the surface is perpendicular to the optical axis of the second infrared sensor 22 and is inclined relative to the first surface 1111 of the circuit board 111.

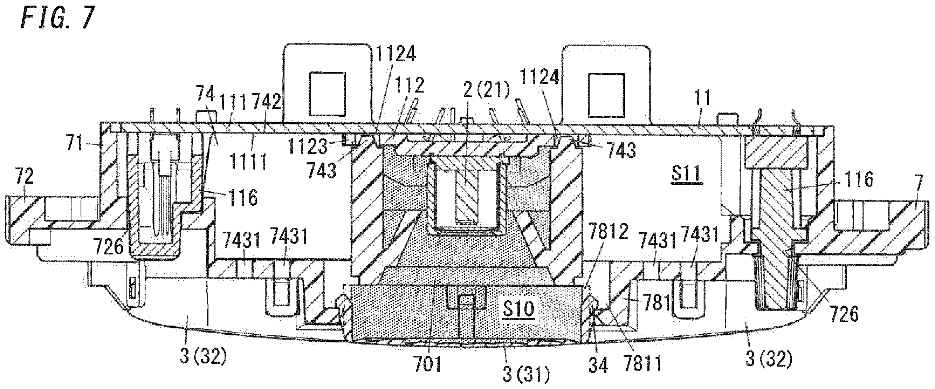

Further, as shown in FIG. 7, the spacer 112 includes a third spacer portion 1123 positioned between the cover 7 and the circuit board 111. The third spacer portion 1123 has a flat plate shape. The third spacer portion 1123 includes a pair of through holes 1124. The pair of through holes 1124 are used for positioning the cover 7 relative to the spacer 112.

The control circuit is configured to turn on and off a switching device 114 (see FIG. 4) based on individual output signals from the plurality of infrared sensors 2. The switching device 114 is coupled between a connection terminal for power coupling and a connection terminal for load coupling, of the power supply circuit module 10 described later.

The sensor module 11 includes a plurality of sensor covers 12 attached one-by-one to the plurality of infrared sensors 2.

The sensor cover 12 surrounds a side of the cap 232 of the package 23 of the infrared sensor 2. The sensor cover 12 is made of material lower in a thermal conductivity than the cap 232. The material of the sensor cover 12 may be an ABS resin, for example.

Further, the sensor module 11 includes a plurality of electronic parts 116 for allowing manual operation of the infrared detector 100. Examples of the manual operation of the infrared detector 100 may include changing parameters (e.g., sensitivity of detection) of the infrared detector 100, changing operation modes of the infrared detector 100, and turning on and off the infrared detector 100. As shown in FIG. 4, the plurality of electronic parts 116 are mounted on the circuit board 111 (the first surface 1111 thereof). Examples of the plurality of electronic parts 116 may include variable resistors, selectors, and switches.

### (3.3) POWER SUPPLY CIRCUIT MODULE

As shown in FIG. 4, the power supply circuit module 10 includes the circuit board 110, a plurality of electronic parts 113 constituting a power supply circuit, the switching device 114, and a terminal block 115. The circuit board 110 includes a printed circuit board. The power supply circuit includes a circuit configured to convert an AC voltage supplied from an external power supply (e.g., a commercial power supply) into a predetermined DC voltage and supply it to the sensor module 11. The plurality of electronic parts 113, the switching device 114, and the terminal block 115 are mounted on the circuit board 110. The switching device 114 may include a triac, for example. The terminal block 115 includes an electrically insulating terminal block body 1051 and six connection terminals to be coupled to external electric cables. The six connection terminals each are housed in the terminal block body 1051. The terminal block body 1051 includes six electric cable insertion holes 1052 one-by-one corresponding to the six connection terminals. Each connection terminal is coupled to an electric cable inserted through a corresponding electric cable insertion hole 1052.

Two connection terminals of the six connection terminals serve as terminals for power supply coupling, other two connection terminals serve as terminals for load coupling, and remaining two connection terminals serve as terminals for slave and master coupling. Examples of the load may include lighting loads. Examples of the slave or the master may include human sensors.

### (3.4) INFRARED TRANSMITTING MEMBER

The infrared transmitting members 3 are made of synthetic resin. Examples of material of the infrared transmitting members 3 may include polyethylene. In more detail, the material of the infrared transmitting members 3 may be polyethylene containing white colorant. The white colorant may be titanium dioxide, for example. The infrared transmitting members 3 may be made by molding. The infrared transmitting members 3 are dielectric.

In the following, if necessary, as to the five infrared transmitting members 3, one infrared transmitting member 3 corresponding to the first infrared sensor 21 may be referred to as a "first infrared transmitting member 31", and four infrared transmitting members 3 one-by-one corresponding to the four second infrared sensors 22 each may be referred to as a "second infrared transmitting member 32".

The first infrared transmitting member 31 includes a multi-lens block 310 (see FIG. 10) causing infrared light from the outside of the first infrared transmitting member 31 to converge on the first infrared sensor 21 (the pyroelectric device 25 thereof). The multi-lens block 310 includes a plurality of (thirty) lenses 311 (see FIG. 10). Further, each of the plurality of second infrared transmitting members 32 includes a multi-lens block 320 (see FIG. 10) causing infrared light from the outside of the second infrared transmitting member 32 to converge on a corresponding one of the second infrared sensors 22. Each multi-lens block 320 includes a plurality of (fifteen) lenses 321 (see FIG. 10). Hereinafter, in some cases, the multi-lens block 310 of the first infrared transmitting member 31 may be referred to as a "first multi-lens block 310", and the lenses 311 of first infrared transmitting member 31 may be referred to as "first lenses 311". Further, in some cases, the multi-lens block 320 of each second infrared transmitting member 32 may be referred to as a "second multi-lens block 320", and the lenses 321 of second infrared transmitting member 32 may be referred to as "second lenses 321".

As shown in FIG. 10, the first multi-lens block 310 includes an entrance surface 3101 where infrared light from the outside strikes, the entrance surface 3101 being constituted by a group of individual entrance surfaces of the plurality of first lenses 311. The first multi-lens block 310 includes an exit surface 3102 where infrared light emerges, the exit surface 3102 being constituted by a group of individual exit surfaces of the plurality of first lenses 311.

Each of the plurality of first lenses 311 of the first multi-lens block 310 functions as a converging lens and is constituted by a convex lens. In this regard, the convex lens constituting each of the plurality of first lenses 311 includes an aspherical lens.

The second multi-lens block 320 includes an entrance surface 3201 where infrared light from the outside strikes, the entrance surface 3201 being constituted by a group of individual entrance surfaces of the plurality of second lenses 321. The second multi-lens block 320 includes an exit surface 3202 where infrared light emerges, the exit surface 3202 being constituted by a group of individual exit surfaces of the plurality of second lenses 321.

Each of the plurality of second lenses 321 of the second multi-lens block 320 functions as a converging lens and is constituted by a convex lens. In this regard, the convex lens constituting each of the plurality of second lenses 321 includes a Fresnel lens.

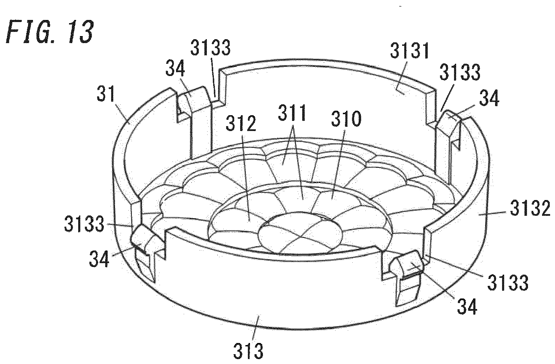

As shown in FIG. 13, the first infrared transmitting member 31 is in a hollow cylindrical shape with a bottom and includes a bottom wall (front wall) 312 provided with the first multi-lens block 310 described above. The first infrared transmitting member 31 includes a side wall 313 provided with four hooks (latching pieces) 34 (see FIG. 10) for attachment of the first infrared transmitting member 31 to the housing 4.

In more detail, as shown in FIG. 13, the first infrared transmitting member 31 includes the front wall 312 in front of the infrared sensor 2 (21) and the side wall 313 protruding from an outer periphery of the front wall 312 toward the circuit board 111. In the present embodiment, the front wall 312 has a circular shape, and the side wall 313 has a circular cylindrical shape. Further, the side wall 313 includes a plurality of (four) openings 3133 each interconnecting an inner peripheral surface 3131 and an outer peripheral surface 3132, of the side wall 313. The four openings 3133 are located at positions dividing the side wall 313 into four equal sections in a circumferential direction of the side wall 313. Each opening 3133 is a cutout with a side opposite to the front wall 312 being open. The first infrared transmitting member 31 further includes the plurality of latching pieces 34. The plurality of latching pieces 34 are portions for attachment of the first infrared transmitting member 31 to the cover 7. Each latching piece 34 protrudes outward from part between opposite ends of a side of the corresponding opening 3133 adjacent to the front wall 312. Especially, each latching piece 34 is positioned at a center of the corresponding opening 3133 in the circumferential direction of the side wall 313.

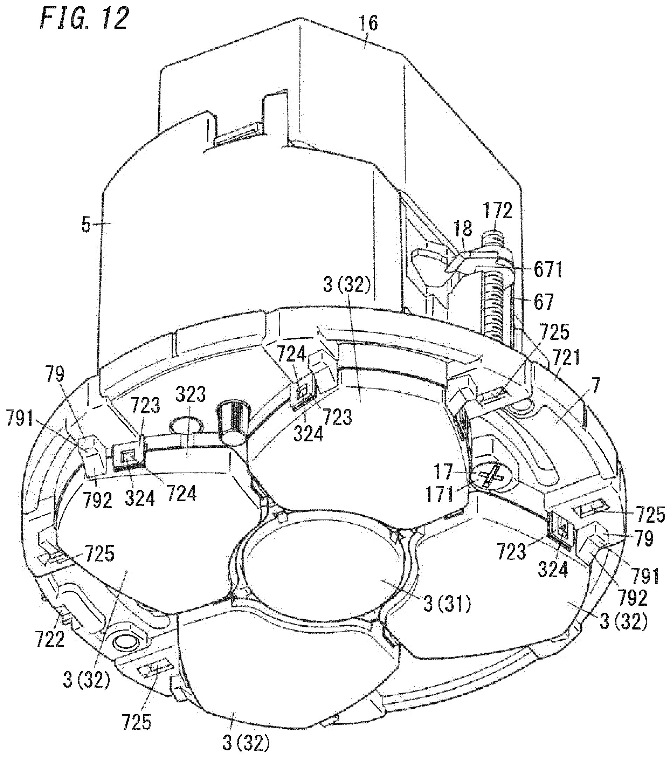

As shown in FIG. 1 and FIG. 10, each of the second infrared transmitting members 32 is in a box shape with a bottom and includes a bottom wall (front wall) 322 provided with the second multi-lens block 320 described above. The second infrared transmitting member 32 includes a side wall 323 provided with a plurality of claws 324 (see FIG. 12) separate in a circumferential direction for attachment of the second infrared transmitting members 32 to the housing 4.

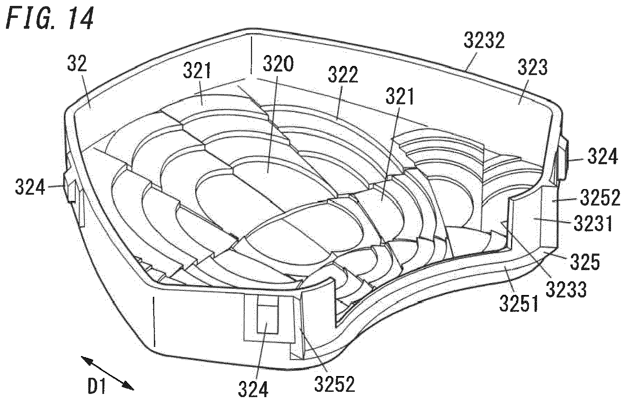

In more detail, as shown in FIG. 14, the second infrared transmitting members 32 each include the front wall 322 in front of the infrared sensor 2 (22) and the side wall 323 protruding from an outer periphery of the front wall 322 toward the circuit board 111. In the present embodiment, the front wall 322 has an almost hexagonal shape. As shown in FIG. 14, the front wall 322 has a shape with as width increasing and then decreasing from a first end to a second end in a length direction D1 thereof. The side wall 323 includes a first portion 3231 corresponding to sides close to the first end in the length direction D1 of the front wall 322, and a second portion 3232 corresponding to remaining sides of the front wall 322. The side wall 323 includes an opening 3233 in the first portion 3231. The opening 3233 is a cutout with a side opposite to the front wall 322 being open. The second infrared transmitting members 32 each further include a plurality of claws 324. The plurality of claws 324 are provided to the second portion 3232 of the side wall 323 and are located at positions which divide the side wall 323 into four almost equal sections in the circumferential direction of the side wall 323. Additionally, the second infrared transmitting members 32 each include a protruded part 325. The protruded part 325 surrounds the opening 3233 except for a side of the opening 3233 opposite from the front wall 322. The protruded part 325 includes a first protruded part 3251 and a pair of second protruded parts 3252. The first protruded part 3251 is formed on part of the first portion 3231 between the opening 3233 and the front wall 322 and extends along the length of the first portion 3231. As shown in an enlarged view of circular part encircled with a broken line in FIG. 6, the first protruded part 3251 includes a surface facing the front wall 322, the surface being inclined to go away from the front wall 322 as it goes away from the side wall 323. The second protruded parts 3252 extend from opposite ends in the length direction of the first protruded part 3251 to go away from the front wall 322. The protruded part 325 has an almost U-shape in its entirety.

The four second infrared transmitting members 32 are arranged in rotational symmetry of order 4 about a center line of the first infrared transmitting member 31.

### (3.5) HOUSING

The housing 4 includes a housing body 5 and a decorative cover 8. The housing body 5 accommodates the power supply circuit module 10 and the sensor module 11. The decorative cover 8 includes a plurality of window holes 83 for individually exposing the plurality of infrared transmitting members 3. The decorative cover 8 is attached to the housing body 5.

The housing body 5 includes a body 6 and a cover 7. The housing body 5 is assembled by coupling the body 6 and the cover 7 together.

The body 6 may be molding of synthetic resin. Examples of material of the body 6 may include an ABS resin. The body 6 has electrically insulating properties. The body 6 has a hollow cylindrical shape with a bottom. The body 6 accommodates the power supply circuit module 10 and the sensor module 11. The body 6 includes a side wall 63 provided with a plurality of (four) coupling protrusions 64 (see FIG. 1 and FIG. 4) for coupling with the cover 7.

There are a plurality of (six) electric cable insertion holes which are formed in an opposite end of the body 6 from the cover 7 and correspond one-by-one to the plurality of (six) electric cable insertion holes 1052 of the terminal block 115. Each electric cable insertion hole is a through hole allowing insertion of an electric cable connected to a quick connection terminal of the terminal block 115.

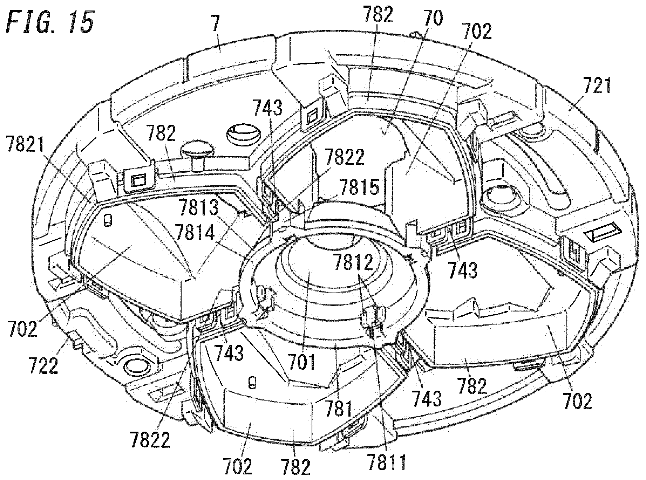

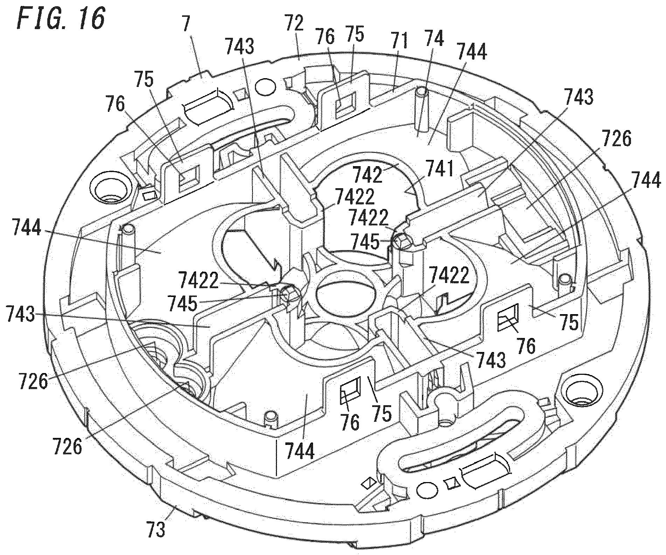

The cover 7 may be molding of synthetic resin. Examples of material of the cover 7 may include an ABS resin. The cover 7 has electrically insulating properties. As shown in FIG. 15 and FIG. 16, the cover 7 includes a hollow cylindrical part 71, a plurality of (four) coupling protruding pieces 75, a flange part 72, a hollow cylindrical partition 74, a first attachment part 781, a plurality of (four) second attachment parts 782.

The plurality of coupling protruding pieces 75 protrude from a first end (an end facing the body 6) in an axial direction of the hollow cylindrical part 71 in the axial direction of the hollow cylindrical part 71. The plurality of coupling protruding pieces 75 correspond one-by-one to the plurality of coupling protrusions 64 of the body 6. Each of the plurality of coupling protruding pieces 75 includes an engagement hole 76 engaged with a corresponding one of the coupling protrusions 64. In summary, the body 6 and the cover 7 are coupled together by engaging each coupling protrusion 64 of the body 6 with each engagement hole 76 of the cover 7.

The flange part 72 protrudes outward from a second end in the axial direction of the hollow cylindrical part 71. The flange part 72 is circular in its outer peripheral shape. In the present embodiment, the flange part 72 is part serving as a cover body. Formed in a center of the flange part 72 is an exposing hole 70 exposing the infrared sensors 2. The exposing hole 70 is connected to an inside space of the cylindrical part 71.

Additionally, the cover 7 further includes a rib 722 protrudes outward in a diametrical direction of the flange part 72 from part of an outer periphery of the flange part 72, wherein the part is closer to a front end (lower end) than a rear end (upper end) of the flange part 72. The shape of the rib 722 looks like a U-shape where an end closer to a front wall 81 of the decorative cover 8 is open when viewed in the diametrical direction. In removing the decorative cover 8 from the housing body 5 with a tool such as a flathead screwdriver, the rib 722 can be used as a fulcrum point for supporting a top of the tool.

Inside the hollow cylindrical part 71, the partition 74 surrounds the five infrared sensors 2. The partition 74 is supported by the hollow cylindrical part 71. The shape of the partition 74 is determined not to interfere with the detection area determined by the five infrared sensors 2 and the five infrared transmitting members 3. The partition 74 is in contact with the sensor module 11 at a periphery 742 of an opening 741 closer to the sensor module 11. In this regard, as shown in FIG. 6, the periphery 742 of the opening 741 of the partition 74 is in contact with any of the first surface 1111 of the circuit board 111 of the sensor module 11, or the spacer 112.

Described in more detail, the partition 74 is part serving as a side wall surrounding the accommodation space S10. As shown FIG. 15 and FIG. 16, the partition 74 includes a plurality of (four) protruded parts 743 and a plurality of (four) inclined parts 744.

As shown in FIG. 16, the four protruded parts 743 protrudes from an inner peripheral surface of the cylindrical part 71 toward a center of the cylindrical part 71. However, the four protruded parts 743 are not in contact with each other. As shown in FIG. 7, the protruded parts 743 each are hollow and an end facing the circuit board 111 (rear end) thereof is open. In contrast, an opposite end of each protruded part 743 from the circuit board 111 (that is, a front end) is closed, but includes a plurality of through holes 7431.

Each of the four inclined parts 744 interconnects adjacent two of the four protruded parts 743. As shown in FIG. 6, each inclined part 744 is inclined to come close to the infrared sensor 2 as it comes close to the circuit board 111 from the cover body (flange part 72). Thereby, the accommodation space S10 can be downsized. This enables an increase in efficiency of use of the front surface 1111 of the circuit board 111.

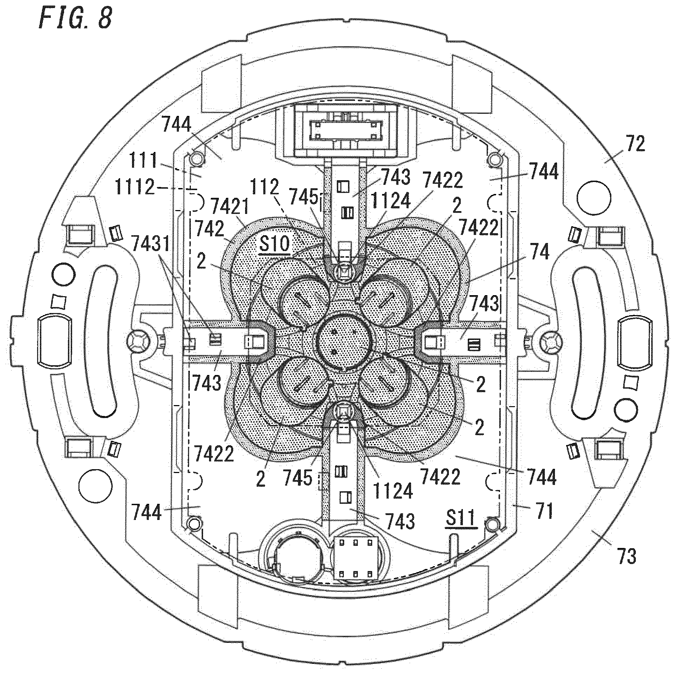

Further, as shown in FIG. 8, each inclined part 744 is warped in a plane perpendicular to a direction coming close to the circuit board 111 from the cover body (flange part 72), the plane being inside the sheet of FIG. 8, and the direction being a direction perpendicular to the sheet of FIG. 8. Thereby, the accommodation space S10 can be downsized. This enables an increase in efficiency of use of the front surface 1111 of the circuit board 111. Note that, in FIG. 8, the circuit board 111 and the spacer 112 are illustrated by dashed-two dotted lines.

As understood from the above, the partition 74 has a hollow cylindrical shape surrounding the infrared sensors 2. As shown in FIG. 6 and FIG. 7, the partition 74 includes the periphery 742 which is opposite from the flange part 72 and is in contact with the front surface 1111 of the circuit board 111. Accordingly, the circuit board 111 closes the opening 741 of the partition 74. Therefore, it is possible to suppress gas from flowing into the accommodation space S10 through a gap between the circuit board 111 and the partition 74.

Especially, as shown in FIG. 8, the periphery 742 of the partition 74 includes a first region 7421 and a plurality of second regions 7422. In FIG. 8, the first regions 7421 and the second regions 7422 are illustrated with different hatching to visually distinguish them from each other. The first regions 7421 are region of the periphery 742 which is in contact with the front surface 1111 of the circuit board 111. The second regions 7422 are regions in contact with the spacer 112 (the third spacer portion 1123 thereof). Accordingly, it is not necessary for the accommodation space S10 to include the whole of the spacer 112. Therefore, the accommodation space S10 can be downsized. Note that, in the present embodiment, the front surface 1111 of the circuit board 111 is flat and the first regions 7421 in contact with this are also flat.

Further, as shown in FIG. 8, the partition 74 includes a pair of positioning protrusions 745. Each of the pair of positioning protrusions 745 has a size fitted into a corresponding one of the pair of through holes 1124 of the third spacer portion 1123. Position of the partition 74 (i.e., the cover 7) relative to the sensor module 11 is determined by fitting the pair of positioning protrusions 745 into the pair of through holes 1124. The pair of positioning protrusions 745 are provided to two of the four protruded parts 743 (two protruded parts 743 facing each other in upward and downward directions in FIG. 8).

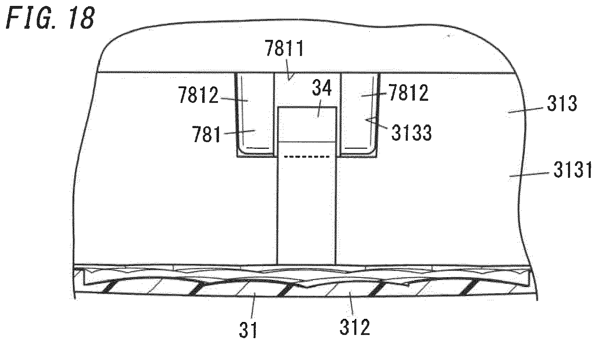

As shown in FIG. 6 and FIG. 7, the first attachment part 781 is a wall (wall part) where the first infrared transmitting member 31 is attached. The shape of the first attachment part 781 is a circular ring extending along the side wall 313 (see FIG. 13) of the first infrared transmitting member 31 (see FIG. 15). In more detail, the first infrared transmitting member 31 is attached to the first attachment part 781 so that the first infrared transmitting member 31 is accommodated inside the first attachment part 781. The first attachment part 781 is provided with recesses 7811 for receiving the four hooks 34 (see FIG. 6) of the first infrared transmitting member 31. The hooks 34 of the first infrared transmitting member 31 are engaged with the recesses 7811, and thereby the first attachment part 781 holds the first infrared transmitting member 31. Further, as shown in FIG. 15, the first attachment part 781 additionally includes a pair of protrusions 7812 protruding from an edge of the recess 7811 of the first attachment part 781. As shown in FIG. 18, the pair of protrusions 7812 are engaged into the openings 3133 to be positioned on opposite sides of the hook 34 when the hook 34 is engaged into the recess 7811. Consequently, it is possible to suppress gas from flowing into the accommodation space S10 through such openings 3133. An inner peripheral surface of the first attachment part 781 is in contact with the outer peripheral surface 3132 of the first infrared transmitting member 31 nearly circumferentially except for regions where the recesses 7811 and the pair of protrusions 7812 are formed.

As shown in FIG. 15 and FIG. 16, the first attachment part 781 is supported by distal ends of the four protruded parts 743 of the partition 74. The first attachment part 781 and the four protruded parts 743 form a dividing wall dividing the exposing hole 70 into a plurality of (five) window sections 701 and 702. As shown in FIG. 15, the plurality of window sections 701 and 702 include a single first window section 701 and four second window sections 702 arranged to surround the first window section 701. The first window section 701 corresponds to the first infrared sensor 21 and the four second window sections 702 correspond to the four second infrared sensors 22.

As shown in FIG. 15, the first attachment part 781 includes a front surface 7814 with a circular ring shape, and an outer peripheral surface continuous to the front surface 7814. The outer peripheral surface of the first attachment part 781 are constituted by four first outer side surfaces 7813 and four second outer side surfaces 7815. The four first outer side surfaces 7813 are curved surfaces (convex surfaces) individually corresponding to the four second window sections 702. The four second outer side surfaces 7815 are parts individually corresponding to the four protruded parts 743, and are flat surfaces.

Each of the four second attachment parts 782 is a wall (wall part) where a corresponding one of the second infrared transmitting members 32 is attached. In more detail, the second attachment part 782 has a hollow prismatic shape almost same as the side wall 323 of the second infrared transmitting member 32. Parts of the aforementioned second attachment parts 782 also serve as parts of the first attachment part 781. The second attachment part 782 is provided with a step part 7821 which is in contact with an internal side surface and an edge of the side wall 323 of the second infrared transmitting members 32 except for part shared with the first attachment part 781 (the front surface 7814, the first outer side surfaces 7813, and the second outer side surfaces 7815, of the first attachment part 781). In summary, the step part 7821 of the second attachment part 782 is in contact with the whole of an inner surface of the second portion 3232 of the second infrared transmitting member 32. Part of the side wall 323 of the second infrared transmitting member 32 closer to the first attachment part 781 (i.e., the first portion 3231) is in contact with the inner side surface of the second attachment part 782 (the outer side surface 7813 of the first attachment part 781).

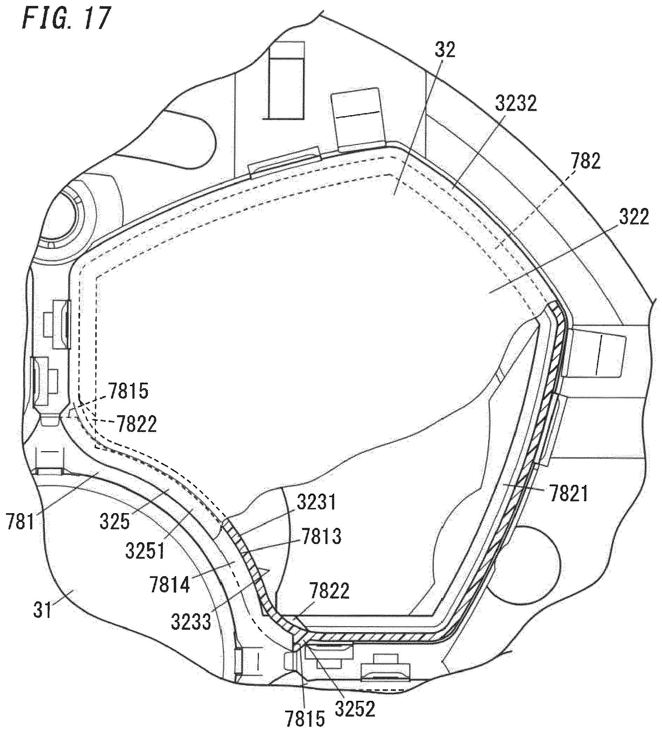

As shown in FIG. 14, the second infrared transmitting member 32 includes the protruded part 325. As shown in an enlarged view in FIG. 6, the protruded part 325 (the first protruded part 3251) comes into contact with the front surface 7814 of the first attachment part 781, when the first portion 3231 of the second infrared transmitting member 32 comes into contact with the first outer side surface 7813 of the first attachment part 781. Further, as shown in FIG. 17, the protruded part 325 (the second protruded parts 3252) comes into contact with the second outer side surfaces 7815 on the opposite sides of the first outer side surface 7813 of the first attachment part 781.

As understood from the above, the second attachment part 782 includes a first surface (the first outer side surface 7813) and a second surface (the front surface 7814) which are continuous, and is in contact with the side wall 323 (the first portion 3231) of the second infrared transmitting member 32 at the first surface (the first outer side surfaces 7813). Additionally, the second infrared transmitting member 32 further includes the protruded part 325 which protrudes from the side wall 323 (the first portion 3231) to be in contact with the second surface (the front surface 7814) of the second attachment part 782. This protruded part 325 covers a gap between the side wall 323 of the second infrared transmitting member 32 and the first outer side surface 7813 of the second attachment part 782. Therefore, gas can be suppressed from flowing into the accommodation space S10 via such a gap.

Note that, as shown in FIG. 15 and FIG. 17, the second attachment part 782 includes a pair of slits 7822 where the first portion 3231 of the second infrared transmitting member 32 is inserted. Therefore, the first portion 3231 of the second infrared transmitting member 32 is inserted into the pair of slits 7822 and thus positioned inside the second attachment part 782 partially.

Further, the cover 7 includes protruding pieces 723 corresponding to the claws 324 protruding from outer surfaces of the side walls 323 of the second infrared transmitting members 32. Each protruding piece 723 includes an engagement hole 724 engaged with a corresponding one of the claws 324.

Further, the cover 7 includes a plurality of manual operation holes 726. The manual operation holes 726 include holes for manually operating the electronic parts 116 of the sensor module 11. As shown in FIG. 16, each manual operation hole 726 is formed in the flange part 72 to be positioned inside the cylindrical part 71 and outside the partition 74. In summary, as shown in FIG. 7, each manual operation hole 726 is connected to a gap S11 between the cylindrical part 71 and the partition 74. This gap S11 includes a space adjacent to the accommodation space S10. Further, as shown in FIG. 6 to FIG. 8, an opening in the first end of the cylindrical part 71 is not completely closed by the circuit board 111. Therefore, each of the plurality of manual operation holes 726 serves as a flow channel which allows gas to flow therethrough in a thickness direction (forward and rearward directions) of the cover 7. Especially, the plurality of manual operation holes 726 serve as a plurality of external flow channels arranged to surround the accommodation space S10. Since these external flow channels (the manual operation holes 726) allow gas to flow therethrough, it is possible to suppress gas from flowing into the accommodation space S10.

Additionally, in the cover 7, as shown in FIG. 7, the plurality of through holes 7431 each are connected to the gap S11 between the cylindrical part 71 and the partition 74. Each of the plurality of through holes 7431 serves as a flow channel which allows gas to flow therethrough in a thickness direction (forward and rearward directions) of the cover 7. Especially, the plurality of through holes 7431 serve as a plurality of internal flow channels formed in the dividing wall (the protruded parts 743 and the first attachment part 781). Since these internal flow channels (the through holes 7431) allow gas to flow therethrough, it is possible to suppress gas from flowing into the accommodation space S10.

The exposing hole 70 (the first window section 701 and the four second window sections 702) of the cover 7 is covered with the plurality of infrared transmitting members 3 (the first infrared transmitting member 31 and the four second infrared transmitting members 32).

The first window section 701 of the cover 7 is closed by attaching the first infrared transmitting member 31 to the first attachment part 781. In attaching the first infrared transmitting member 31 to the first attachment part 781, the first infrared transmitting member 31 is inserted into the first attachment part 781, and the four latching pieces (the hooks 34) of the first infrared transmitting member 31 are engaged into four spaces (the recesses 7811) of the first attachment part 781. In this regard, when the hook 34 is engaged into the recess 7811, the pair of protrusions 7812 of the first attachment part 781 are engaged into the opening 3133 of the first infrared transmitting member 31 to be positioned on opposite ends of the hook 34, as shown in FIG. 18. Accordingly, it is possible to suppress gas from flowing into the accommodation space S10 through such openings 3133. Thus, it may be possible to suppress gas from flowing into the accommodation space S10 through the exposing hole 70 of the cover 7.

The second window sections 702 of the cover 7 are closed by attaching the second infrared transmitting members 32 to the second attachment parts 782. In attaching the second infrared transmitting members 32 to the second attachment parts 782, the first portion 3231 of the second infrared transmitting member 32 is placed inside the second attachment part 782 by use of the slits 7822, and the second portion 3232 is placed outside the second attachment part 782 (see FIG. 17). And, each of the plurality of claws 324 of the second infrared transmitting member 32 is engaged into a corresponding engagement hole 724 of the cover 7. In this regard, the second portion 3232 of the second infrared transmitting member 32 encloses the second attachment part 782 and therefore a gap between the second portion 3232 and the second attachment part 782 is not exposed on a front side of the cover 7. Consequently, it may be difficult for gas to flow into the accommodation space S10 via such a gap. Further, when the first portion 3231 of the second infrared transmitting member 32 comes into contact with the first outer side surface 7813 of the second attachment part 782, the protruded part 325 (the first protruded part 3251) also comes into contact with the front surface 7814 of the second attachment part 782 as shown in FIG. 6. Simultaneously, the protruded part 325 (the second protruded parts 3252) come into contact with the second outer side surfaces 7815 on opposite sides of the first outer side surface 7813 of the second attachment part 782. As understood from the above, the protruded part 325 covers a gap between the first portion 3231 of the second infrared transmitting member 32 and the second attachment part 782. Accordingly, the protruded part 325 may suppress gas from flowing into the accommodation space S10 via a gap between the side wall 323 of the second infrared transmitting member 32 and the first outer side surface 7813 of the second attachment part 782. Thus, it may be possible to suppress gas from flowing into the accommodation space S10 through the exposing hole 70 of the cover 7.

As understood from the above, the five infrared transmitting members 3 (the single first infrared transmitting member 31 and the four second infrared transmitting members 32) are placed not to change in their positions relative to the circuit board 111. In more detail, the single first infrared transmitting member 31 and the four second infrared transmitting members 32 are fixed to the cover 7 and the sensor module 11 (the circuit board 111) is accommodated in the housing 4 not to change in its position relative to the cover 7. Accordingly, optical relationship between the infrared transmitting members 3 and the infrared sensors 2 of the circuit board 111 can be stabilized easily.

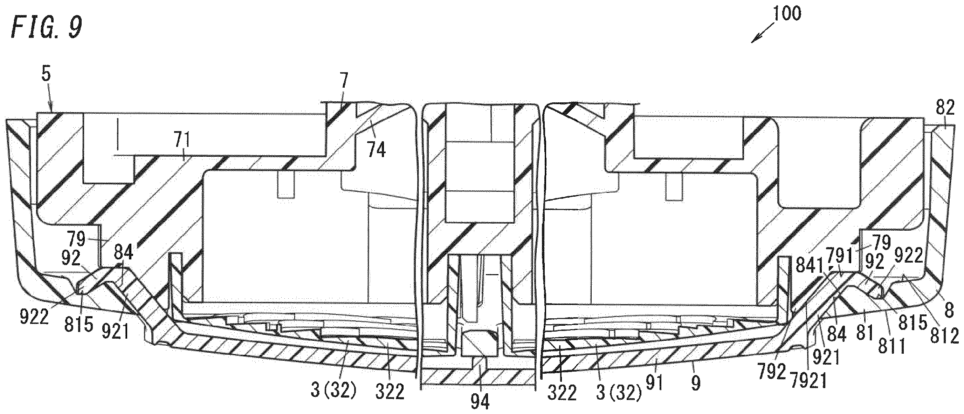

The decorative cover 8 may be molding of synthetic resin. Examples of material of the decorative cover 8 may include an ABS resin. The decorative cover 8 has electrically insulating properties. The decorative cover 8 includes the front wall 81 having a disk shape and a side wall 82 extending rearward from the periphery of the front wall 81. The decorative cover 8 includes a front surface 811 and a rear surface 812 (see FIG. 9). The decorative cover 8 has a circular outer peripheral shape. The side wall 82 of the decorative cover 8 has an inner diameter slightly larger than an outer diameter of the flange part 72.

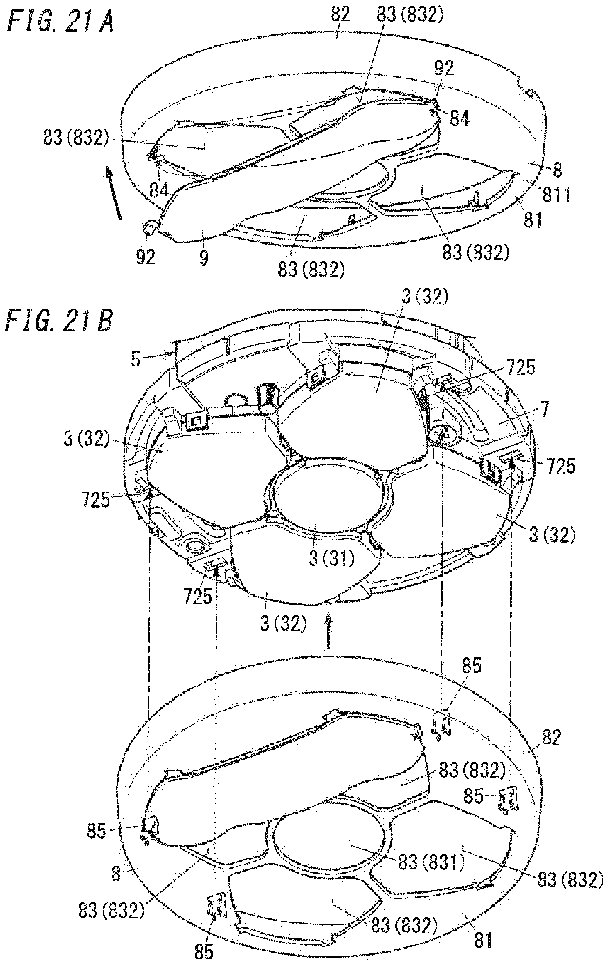

The decorative cover 8 includes a plurality of (four) latching claws 85 (see FIG. 21B) for detachably attachment to the housing body 5 (the flange part 72 thereof). The plurality of latching claws 85 are provided to the rear surface 812 of the decorative cover 8. The decorative cover 8 is attached to the flange part 72 by inserting each of the plurality of latching claws 85 into a corresponding attachment hole 725 of a plurality of attachment holes 725 (see FIG. 21B) of the flange part 72 to engage it with a periphery of the corresponding attachment hole 725.

When attached to the flange part 72, the decorative cover 8 covers the outer peripheral surface 721 of the flange part 72, heads 171 of screws 17, and the like.

The side wall 82 of the decorative cover 8 is formed with a cutout for receiving the rib 722 of the cover 7. Accordingly, in removing the decorative cover 8 from the housing body 5, a top of a tool such as a flathead screwdriver can be inserted through the cutout into a space between an inner surface of the cutout and the rib 722 of the cover 7. Then, force can be applied to the decorative cover 8 to push it from the opposite side from the front surface 811, with the rib 722 being a fulcrum point. Thus, engagement of the latching claws 85 of the decorative cover 8 with the peripheries of the attachment holes 725 of the cover 7 can be broken. Thereby the decorative cover 8 can be removed from the housing body 5.

The decorative cover 8 includes a plurality of (five) window holes 83 formed in the front wall 81. Hereinafter, in some cases, as to the five window holes 83, a window hole 83 which exposes the first infrared transmitting member 31 may be referred to as a "first window hole 831", and window holes 83 which one-by-one expose the second infrared transmitting members 32 may be referred to as "second window holes 832". The first window hole 831 is formed in a center of the front wall 81 of the decorative cover 8. The first window hole 831 has a circular opening shape. The four second window holes 832 are arranged in a circumferential direction of the first window holes 831 at regular intervals to surround the first window holes 831.

### (3.6) TERMINAL COVER

The terminal cover 16 is detachably attached to the body 6 to cover a plurality of electric cable insertion holes formed in the body 6. The terminal cover 16 may be molding of synthetic resin. The terminal cover 16 has electrically insulating properties.

### (3.7) ATTACHMENT DEVICE

The attachment device 20 is a device for attachment of the housing body 5 to an exposed attachment cover or the like, for example. The exposed attachment cover is formed into a hollow cylindrical shape with a bottom. The exposed attachment cover has a size capable of accommodating the infrared detector 100. The exposed attachment cover is formed integrally with a pair of shoulders which protrude inward in radial directions from an inner peripheral surface of its side wall and face each other. A distance between the pair of shoulders is smaller than the diameter of the flange part 72 in the housing 4 and is larger than a dimension of the body 6 in a shorter direction. The exposed attachment cover includes an electric cable insertion hole formed in a center of a bottom wall (top plate) thereof to allow an electric cable to pass therethrough. Further, the exposed attachment cover includes screw insertion holes which are formed in a vicinity of the electric cable insertion hole of the bottom wall thereof to allow screws for attachment of the exposed attachment cover to a wiring duct or the like to pass therethrough. The exposed attachment cover includes projections at lower surfaces of the shoulders, wherein the projections can be engaged with recesses formed in an upper surface of the flange part 72.

The attachment device 20 includes two screws 17, two clamping metal parts 18, and two bushes 19.

As shown in FIG. 3, FIG. 11 and FIG. 12, each screw 17 includes the head 171 and a shaft 172 which has a length and includes a male thread 1721. The shafts 172 of the screws 17 are inserted into screw insertion holes 727 (see FIG. 3) of the flange part 72 and are located beside the body 6.

The bush 19 is located beneath the head 171 of the screw 17 to surround an entire circumference of the shaft 172, and between the shaft 172 (part between the head 171 and the male thread 1721 thereof) of the screw 17 and the screw insertion hole 727 of the flange part 72.

Each clamping metal part 18 includes a female thread engaged with a male thread 1721 of a shaft 172 of a screw 17, and is engaged with the male thread 1721 of the shaft 172.

The attachment device 20 includes accommodation parts 67 which protrude laterally from the side wall 63 of the body 6 to individually accommodate the shafts 172 of the screws 17. The accommodation part 67 includes a slit 671 (see FIG. 3, FIG. 4, and FIG. 12) formed at an opposite end of the accommodation part 67 from an end facing the flange part 72. The slit 671 allows rotation of the clamping metal part 18 in a plane perpendicular to an axial direction of the shaft 172 of the screw 17.

By engaging the projections of the exposed attachment cover into the recesses of the flange part 72 and then tightening the screws 17, the shoulders can be held between the flange part 72 and the clamping metal parts 18. By doing so, the infrared detector 100 is detachably attached to the exposed attachment cover.

### (3.8) LIGHT SHIELDING PLATE

The light shielding plate 9 may be molding of synthetic resin. The light shielding plate 9 is made of material having properties of shielding or blocking infrared light. Examples of the material of the light shielding plate 9 may include polycarbonate. The light shielding plate 9 is clear and colorless.

The light shielding plate 9 is placed to overlap with two infrared transmitting members 3 of the plurality of infrared transmitting members 3. The light shielding plate 9 is attached to the housing 4 (the decorative cover 8 thereof) to extend over the two infrared transmitting members 3 of the plurality of infrared transmitting members 3.

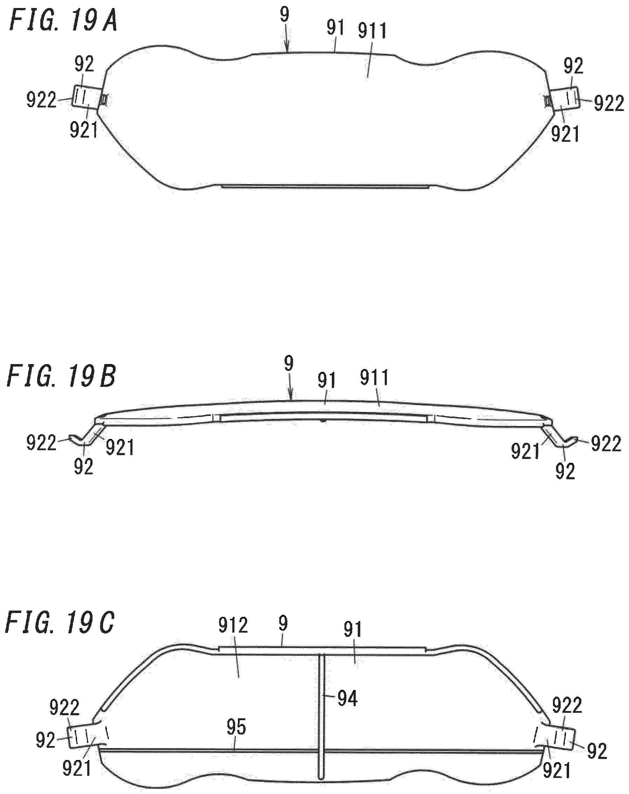

The light shielding plate 9 includes first part in contact with the front surface 811 of the decorative cover 8 and second part in contact with the rear surface 812 of the decorative cover 8. The light shielding plate 9 includes a light shielding plate body 91 and a plurality of (two) attachment claws 92 (see FIG. 9, FIG. 19A, FIG. 19B and FIG. 19C) protruding from the light shielding plate body 91 to be engaged with the rear surface 812 of the decorative cover 8. The light shielding plate body 91 has a plate shape having a length, and includes a front surface 911 and a rear surface 912. The first part may include a rib protruding from the rear surface 912 of the light shielding plate body 91 (a first rib 94 described later). The second part may include the plurality of attachment claws 92.

As to structure for attachment of the light shielding plate 9 to the housing 4, as shown in FIG. 9, the two attachment claws 92 are sandwiched between the decorative cover 8 and the housing body 5.

The two attachment claws 92 each include a leg piece 921 protruding from the light shielding plate body 91 toward the housing body 5, and a claw piece 922 protruding from a distal end of the leg piece 921 away from the housing body 5. The two attachment claws 92 protrude from opposite ends of the light shielding plate body 91 in its length axis so that one attachment claw 92 protrudes from each one end of the light shielding plate body 91.

As shown in FIG. 9C, the light shielding plate 9 includes the first rib 94 and a second rib 95 which protrude from the rear surface 912 of the light shielding plate body 91. The first rib 94 is formed on a center of the light shielding plate body 91 in its length axis and extends along a width axis of the light shielding plate body 91. The first rib 94 is to be in contact with part of the decorative cover 8 between the two second window holes 832 corresponding to the two infrared transmitting members 3 (see FIG. 9). The second rib 95 is formed to extend along the length axis of the light shielding plate body 91. As to the light shielding plate 9, part of the light shielding plate body 91 can be removed by cutting along the second rib 95. In the infrared detector 100, attaching the partially cut light shielding plate body 91 to the housing 4 can expand the detection area relative to attaching the light shielding plate body 91 to the housing 4 without cutting it.

### (3.9) STRUCTURE FOR ATTACHMENT OF LIGHT SHIELD TO HOUSING

The housing 4 allows attachment of a plurality of light shielding plates 9 to the decorative cover 8.

The decorative cover 8 includes a plurality of (two) cutouts 84 which are formed in an inner periphery of each second window hole 832 and each allow any one attachment claw 92 of the two attachment claws 92 of the light shielding plate 9 to pass therethrough. In summary, the decorative cover 8 includes two cutouts 84 for each of the plurality of (four) second window holes 832. The two cutouts 84 for each second window hole 832 are away from each other in a direction along a circumferential direction of the decorative cover 8. The cutouts 84 each have a quadrangle shape when viewed from front of the decorative cover 8.

As shown in FIG. 2 and FIG. 9, as to the light shielding plate 9, one attachment claw 92 is inserted into one of cutouts 84 of one second window hole 832 (said one is further from the other window hole 832 than the other) of the two second window holes 832 arranged side by side in a direction parallel to one radial direction of the decorative cover 8, and the other attachment claw 92 is inserted into one of cutouts 84 of the other second window holes 832 (said one is further from said one window hole 832 from the other). As shown in FIG. 9, an internal side surface of each cutout 84 includes an inclined surface 841 in contact with the leg piece 921 of the corresponding attachment claw 92 of the light shielding plate 9.

The decorative cover 8 includes recesses 815 (see FIG. 9) which are formed in vicinities of the cutouts 84 in the rear surface 812 thereof and are engaged with the claw pieces 922 of the attachment claws 92 of the light shielding plate 9. Accordingly, the claw pieces 922 of the two attachment claws 92 of the light shielding plate 9 are engaged with the two recesses 815 of the decorative cover 8.

In the housing 4, two cutouts 84 arranged side by side in a direction parallel to one of radial directions of the decorative cover 8 constitute one light shielding plate attachment structure. Accordingly, the housing 4 includes a plurality of light shielding plate attachment structures. The light shielding plate 9 is attached to one light shielding plate attachment structure of the plurality of light shielding plate attachment structures.

The housing 4 includes a plurality of (eight) positioning ribs 79 (FIG. 9 and FIG. 12). The eight positioning ribs 79 protrude from a front surface, facing the decorative cover 8, of the housing body 5 (a front surface of the flange part 72) toward the front wall 81 of the decorative cover 8. The eight positioning ribs 79 are formed in the flange part 72. The eight positioning ribs 79 are arranged in a direction along a circumferential direction of the flange part 72 and spaced from each other.

Each of the eight positioning ribs 79 is at a position which allows the attachment claw 92 (FIG. 9, FIG. 19A, FIG. 19B and FIG. 19C) of the light shielding plate 9 to be sandwiched between the positioning rib 79 and the decorative cover 8. In more detail, two of the eight positioning ribs 79 form spaces where the attachment claws 92 of the light shielding plate 9 are sandwiched between the decorative cover 8 and said two in a thickness direction of the front wall 81 of the decorative cover 8.

As shown in FIG. 9, each of the eight positioning ribs 79 includes a first portion 791 and a second portion 792. The first portion 791 is portion which is in planar contact with a distal end of the leg piece 921 of the attachment claw 92. The first portion 791 has a rectangular parallelepiped shape. The first portion 791 is formed at a position overlapping with a vicinity of the cutout 84 of the decorative cover 8. The second portion 792 is formed at a position overlapping with the cutout 84 of the decorative cover 8. The second portion 792 is portion which is in contact with a side facing the light shielding plate body 91, of the leg piece 921 of the attachment claw 92 which is one of the two attachment claws 92 and is held between the decorative cover 8 and the second portion 792. The second portion 792 of the positioning rib 79 includes an inclined surface 7921 which is in planar contact with a surface facing the light shielding plate body 91, of the leg pieces 921. The decorative cover 8 allows the leg piece 921 of the light shielding plate 9 to be sandwiched between the inclined surface 841 of the cutout 84 and the inclined surface 7921 of the positioning rib 79.

In attaching the light shielding plate 9 to the housing 4, first the decorative cover 8 is detached from the housing body 5. Next, as shown in FIG. 21A, one attachment claw 92 of the two attachment claws 92 of the light shielding plate 9 may be inserted into one of the cutouts 84 of the decorative cover 8 and said one attachment claw 92 may be engaged with the rear surface 812 of the decorative cover 8, and subsequently the light shielding plate 9 may be flexed and the other attachment claw 92 of the light shielding plate 9 may be inserted into the other cutout 84 and the attachment claw 92 may be engaged with the decorative cover 8. Thereby, the light shielding plate 9 may be attached to the decorative cover 8. In this regard, the light shielding plate 9 is placed to extend over the two window holes 83 and part between the two window holes 83, of the decorative cover 8. Consequently, it may be prevented that the light shielding plate 9 is unintentionally detached and falls from the rear surface 812 of the decorative cover 8.

After that, as shown in FIG. 21B, the decorative cover 8 where the light shielding plate 9 is attached is positioned opposite the housing body 5 and is moved toward the housing body 5. Thereafter, the decorative cover 8 is attached to the housing body 5. According to the infrared detector 100, the positioning ribs 79 include the second portions 792. Therefore, even when the claw pieces 922 of the attachment claws 92 fail to be engaged into the recess 815 when the light shielding plate 9 is attached to the decorative cover 8, engagement of the claw pieces 922 of the attachment claws 92 into the recess 815 can be completed more surely by attaching the decorative cover 8 to the housing body 5.

In contrast, in detaching the light shielding plate 9 from the housing 4, the decorative cover 8 may be detached from the housing body 5 and thereafter the light shielding plate 9 may be flexed and the claw pieces 922 of the attachment claws 92 may be pulled out from the recess 815 of the decorative cover 8, thereby the light shielding plate 9 being detached from the decorative cover 8.

### (3.10) DETECTION AREA OF INFRARED DETECTOR

In one example, the infrared detector 100 is assumed to be used to be located such that a center line of the predetermined detection area is oriented vertically downward. The predetermined detection area may be a three-dimensional area with a four sided pyramid shape. The predetermined detection area has a square shape in a horizontal plane perpendicular to its central line. A solid angle of the predetermined detection area may be determined by the plurality of infrared sensors 2 and the plurality of infrared transmitting members 3 , for example.

The predetermined detection area includes a plurality of small detection areas the number (90) of which is equal to the sum of the number (30) of first lenses 311 of the first multi-lens block 310 (see FIG. 10) and the number (4 * 15 = 60) of second lenses 321 of the four second multi-lens block 320 (see FIG. 10). Each of the plurality of (ninety) small detection areas includes a plurality of (four) tiny detection areas one-by-one corresponding to a plurality of (four) detectors of the pyroelectric device 25. The plurality of tiny detection areas are oriented in different directions from the pyroelectric device 25. Each of the plurality of tiny detection areas has a four-sided oblique pyramid shape. A solid angle of each of the plurality of tiny detection areas is smaller than solid angles of the small detection areas. In other words, the tiny detection areas are narrower than the small detection areas. The tiny detection areas may be: three-dimensional areas formed by extending rays of infrared light which strike the detectors of the pyroelectric device 25 of the first infrared sensor 21 through the first lenses 311, in opposite directions from directions in which infrared light proceeds. Or, the tiny detection areas may be three-dimensional areas formed by extending rays of infrared light which strike the detectors of the pyroelectric device 25 of the second infrared sensors 22 through the second lenses 321, in opposite directions from directions in which infrared light proceeds. In other words, the tiny detection areas may be three-dimensional areas which allow passage of rays of infrared light used for producing images on the light receiving surfaces of the detectors of the pyroelectric device 25. The tiny detection areas can be determined by user of results of simulation using software for ray tracing and analysis, for example. The predetermined detection area, each small detection area and each tiny detection area may be three dimensional areas defined optically but may not be three dimensional areas that can be visually perceived by actual persons. The small detection areas may depend on sizes and shapes of the window members 233 of the infrared sensors 2, opening shapes of the window holes 2321, and the like in some cases.

### (3.11) ACCOMMODATION SPACE

In the infrared detector 100, as shown in FIG. 5 to FIG. 8, the exposing hole 70 (the first window section 701 and the four second window sections 702) of the cover 7 is covered with the plurality of infrared transmitting members 3 (the first infrared transmitting member 31 and the four second infrared transmitting members 32). And, as shown in FIG. 6 to FIG. 8, the cover 7 includes the partition 74 which protrudes from the cover body (flange part) 72 toward the circuit board 111 to surround the exposing hole 70 (701, 702). The partition 74 has its periphery 742 which is opposite from the flange part 72 and is in contact with the front surface 1111 of the circuit board 111. Accordingly, in the infrared detector 100, as shown in FIG. 6 to FIG. 8, the circuit board 111, the cover 7, and the plurality of infrared transmitting members 3 form the accommodation space S10. And, all of the plurality of infrared sensors 2 are located inside the accommodation space S10. In the infrared detector 100, all of the plurality of infrared sensors 2 are present under the same environment. Therefore, in contrast to a case where the plurality of infrared sensors 2 are located in different spaces, it may be possible to reduce false detection due to environmental differences.

### (VARIATIONS)

The aforementioned embodiment is one of various embodiments according to the present invention. The aforementioned embodiment can be modified in various ways according to design or the like as long as it can solve the technical problem of the present invention.

The number of infrared sensors 2 may not be limited particularly. The infrared detector 100 may include one infrared sensor 2 only.

The pyroelectric device 25 may not be limited to a quad pyroelectric device, but may be a dual pyroelectric device, a single pyroelectric device, or the like. Further, shapes, arrangement, and the like of one or more detectors of the pyroelectric device 25 may not be limited.

The pyroelectric device 25 is a pyroelectric device which is used in a current detection mode and outputs current signals as its output signals but may not be limited to this. For example, the pyroelectric device 25 may include a pyroelectric device which is used in a voltage detection mode and outputs voltage signals as its output signals. Further, the pyroelectric device 25 may not be limited to configuration including a pyroelectric material substrate but may be a chip including one or more detectors which are formed by stacking a rear surface electrode, a pyroelectric material film, and a front surface electrode in this order on an electrically insulating film formed on a surface of a silicon substrate.

The infrared detectors 100 to 104 may include thermopiles, resistive bolometers, or the like, instead of the pyroelectric devices 25, as thermal infrared detectors in the infrared sensors 2.

The window member 233 of the package 23 of the infrared sensor 2 may include one or more semiconductor lenses such as silicon lenses.

The number of accommodation spaces S10 may not be limited particularly. The infrared detector 100 may include a plurality of accommodation spaces S10. For example, the accommodation space S10 may be divided into a plurality of spatial sections. Each of the plurality of accommodation spaces S10 may accommodate one or more infrared sensors 2 therein.

The number of infrared transmitting members 3 may not be limited particularly. Especially, the number of infrared transmitting members 3 may not always be equal to the number of infrared sensors 2. The shapes of the infrared transmitting members 3 may not be limited particularly. For example, the infrared transmitting members 3 each may not include a multi-lens block (310, 320).

The sensor module 11 may not include the spacer 112.

The shape of the cover 7 may not be limited particularly. For example, the outer peripheral shape of the flange part 72 serving as the cover body may be a shape other than a circular shape (e.g., a polygonal shape). The flange part 72 may not always protrude outward from the cylindrical part 71.

Additionally, it may be sufficient that the partition 74 has a hollow cylindrical shape surrounding the exposing hole 70, and the inclined parts 744 and the protruded parts 743 may be optional.

Moreover, the cover 7 may not include the partition (the protruded parts 743 and the first attachment part 781). In other words, the exposing hole 70 of the cover 7 may not be always divided into the plurality of window sections 701 and 702. For example, it may be sufficient that the exposing hole 70 of the cover 7 is covered with one or more infrared transmitting members 3. The cover 7 may include a plurality of exposing holes 70.

Further, the cover 7 may not always include flow channels (internal flow channels and external flow channels).

Furthermore, the number of light shielding plates 9 may not be limited particularly. The infrared detector 100 may include a plurality of light shielding plates 9. Or, the infrared detector 100 may not include any light shielding plate 9.

The infrared detector 100 of the above embodiment includes various components. However, the accommodation space S10 can be formed as long as the infrared detector 100 includes at least one infrared sensor 2, at least one circuit board 111, at least one cover 7, and at least one infrared transmitting member 3.

### (SUMMARY)

It would be obvious that the following aspects can be derived from the embodiments and the like described above.

An infrared detector (100) according to a first aspect includes: an infrared sensor (2, 21, 22); a circuit board (111) including a front surface (1111) where the infrared sensor (2, 21, 22) is mounted; a cover (7) which faces the front surface (1111) of the circuit board (111) and includes an exposing hole (70) exposing the infrared sensor (2, 21, 22); and an infrared transmitting member (3, 31, 32) covering the exposing hole (70). The circuit board (111) includes a front surface (1111) and the infrared sensor (2, 21, 22) is mounted on the front surface (1111). The cover (7) faces the front surface (1111) of the circuit board (111) and includes an exposing hole (70) exposing the infrared sensor (2, 21, 22). The infrared transmitting member (3, 31, 32) covers the exposing hole (70). The circuit board (111), the cover (7), and the infrared transmitting member (3, 31, 32) form an accommodation space (S10) enclosing the infrared sensor (2, 21, 22) therein. The first aspect can reduce occurrence of false detection due to flow of gas.

An infrared detector (100) according to a second aspect would be realized in combination with the first aspect. In the second aspect, the cover (7) includes a cover body (72) including the exposing hole (70), and a partition (74) which protrudes from the cover body (72) toward the circuit board (111) to surround the exposing hole (70). The partition (74) includes a periphery (742) which is opposite from the cover body (72) and is in contact with the front surface (1111) of the circuit board (111). According to the second aspect, it is possible to suppress gas from flowing into the accommodation space (S10) through a gap between the circuit board (111) and the partition (74).

An infrared detector (100) according to a third aspect would be realized in combination with the second aspect. In the third aspect, the infrared detector (100) further includes a spacer (112) positioned between the infrared sensor (2, 21, 22) and the circuit board (111). The periphery (742) of the partition (74) includes a first region (7421) in contact with the front surface (1111) of the circuit board (111) and a second region (7422) in contact with the spacer (112). According to the third aspect, it is not necessary for the accommodation space (S10) to include the whole of the spacer (112) and therefore the accommodation space (S10) can be downsized.

An infrared detector (100) according to a fourth aspect would be realized in combination with the second or third aspect. In the fourth aspect, the partition (74) includes an inclined part (744) which is inclined to come close to the infrared sensor (2, 21, 22) as it comes close to the circuit board (111) from the cover body (72). According to the fourth aspect, the accommodation space (S10) can be downsized and this enables an increase in efficiency of use of the front surface (1111) of the circuit board (111).

An infrared detector (100) according to a fifth aspect would be realized in combination with the fourth aspect. In the fifth aspect, the inclined part (744) is warped in a plane perpendicular to a direction coming close to the circuit board (111) from the cover body (72). According to the fifth aspect, the accommodation space (S10) can be downsized and this enables an increase in efficiency of use of the front surface (1111) of the circuit board (111).

An infrared detector (100) according to a sixth aspect would be realized in combination with any one of the first to fifth aspects. In the sixth aspect, the infrared transmitting member (3, 32) includes a front wall (322) in front of the infrared sensor (2, 22) and a side wall (323) protruding from an outer periphery of the front wall (322) toward the circuit board (111). The cover (7) includes a wall part (the second attachment part 782) which includes a first surface (7813) and a second surface (7814) which are continuous, the wall part (782) being in contact with the side wall (323) at the first surface (7813). The infrared transmitting member (3, 32) further includes a protruded part (325) which protrudes from the side wall (323) to be in contact with the second surface (7814) of the wall part (782). According to the sixth aspect, it may be possible to suppress gas from flowing into the accommodation space (S10) through the exposing hole (70) of the cover (7).

An infrared detector (100) according to a seventh aspect would be realized in combination with any one of the first to fifth aspects. In the seventh aspect, the infrared transmitting member (3, 31) includes a front wall (312) in front of the infrared sensor (2, 21) and a side wall (313) protruding from an outer periphery of the front wall (312) toward the circuit board (111). The side wall (313) includes an opening (3133) interconnecting an inner peripheral surface (3131) and an outer peripheral surface (3132), of the side wall (313). The infrared transmitting member (3, 31) further includes a latching piece (34) protruding outward from part between opposite ends of a side of the opening (3133) adjacent to the front wall (312). The cover (7) further includes a wall part (the first attachment part 781) and a pair of protrusions (7812). The wall part (781) includes a space (7811) engaged with the latching piece (34) and is in contact with the outer peripheral surface (3132) of the side wall (313) to block the opening (3133). The pair of protrusions (7812) protrude from an edge of the space (7811) of the wall part (781) to be engaged into the opening (3133) to be positioned on opposite sides of the latching piece (34). According to the seventh aspect, it may be possible to suppress gas from flowing into the accommodation space (S10) through the exposing hole (70) of the cover (7).

An infrared detector (100) according to an eighth aspect would be realized in combination with any one of the first to seventh aspects. In the eighth aspect, the cover (7) further includes one or a plurality of flow channels (726, 7431) located outside the accommodation space (S10) and adjacent to the accommodation space (S10) to allow gas to flow therethrough in a thickness direction of the cover (7). According to the eighth aspect, since the one or more flow channels (726, 7431) allow gas to flow therethrough, it is possible to suppress gas from flowing into the accommodation space (S10).

An infrared detector (100) according to a ninth aspect would be realized in combination with the eighth aspect. In the ninth aspect, the plurality of flow channels (726, 7431) include a plurality of external flow channels (726) arranged to surround the accommodation space (S10). According to the ninth aspect, since the external flow channels (726) allow gas to flow therethrough, it is possible to suppress gas from flowing into the accommodation space (S10).

An infrared detector (100) according to a tenth aspect would be realized in combination with the eighth aspect. In the tenth aspect, the cover (7) includes a dividing wall (743, 781) dividing the exposing hole (70) into a plurality of window sections (701, 702). The plurality of flow channels (726, 7431) include a plurality of internal flow channels (7431) formed in the dividing wall (743, 781). According to the tenth aspect, since the internal flow channels (7431) allow gas to flow therethrough, it is possible to suppress gas from flowing into the accommodation space (S10).

An infrared detector (100) according to an eleventh aspect would be realized in combination with any one of the first to tenth aspects. In the eleventh aspect, the infrared detector (100) includes a plurality of the infrared sensors (2, 21, 22). All of the plurality of infrared sensors (2, 21, 22) are inside the accommodation space (S10). According to the eleventh aspect, since all of the plurality of infrared sensors (2, 21, 22) are present under the same environment, it may be possible to reduce false detection due to environmental differences in contrast to a case where the plurality of infrared sensors (2, 21, 22) are located in different spaces.

An infrared detector (100) according to a twelfth aspect would be realized in combination with any one of the first to eleventh aspects. In the twelfth aspect, the infrared transmitting member (3, 31, 32) is placed not to change in a position relative to the circuit board (111). According to the twelfth aspect, optical relationship between the infrared transmitting member (3) and the infrared sensor (2) of the circuit board (111) can be stabilized easily.

### Reference Signs List

- 100: Infrared Detector
- 2, 21, 22: Infrared Sensor
- 3, 31, 32: Infrared Transmitting Member
- 312: Front Wall
- 313: Side Wall
- 3131: Inner Peripheral Surface
- 3132: Outer Peripheral Surface
- 3133: Opening
- 322: Front Wall
- 323: Side Wall
- 325: Protrusion
- 34: Hook (Latching Piece)
- 7: Cover
- 70: Exposing Hole
- 72: Flange Part (Cover Body)
- 726: Operation Hole (External Flow Channel)
- 74: Partition
- 742: Periphery
- 7421: First Region
- 7422: Second Region
- 743: Protruding Part (Dividing Wall)
- 7431: Through Hole (Internal Flow Channel)
- 744: Inclined Part
- 781: First Attachment Part (Wall Part, Dividing Wall)
- 7811: Recess (Space)
- 7812: Protrusion
- 7813: First External Side Surface (First Surface)
- 7814: Front Surface (Second Surface)
- 7815: Second External Side Surface
- 782: Second Attachment Part (Wall Part)
- 111: Circuit Board
- 1111: Front Surface
- 112: Spacer
- S10: Accommodation Space

## Claims

1. An infrared detector (100) comprising:
an infrared sensor (2, 21, 22);
a circuit board (111) including a front surface (1111), the infrared sensor (2, 21, 22) being mounted on the front surface (1111);
a cover (7) which faces the front surface (1111) of the circuit board (111) and includes an exposing hole (70) exposing the infrared sensor (2, 21, 22); and
an infrared transmitting member (3, 31, 32) covering the exposing hole (70),
the circuit board (111), the cover (7), and the infrared transmitting member (3, 31, 32) forming an accommodation space (S10) enclosing the infrared sensor (2, 21, 22) therein.

2. The infrared detector (100) according to claim 1, wherein:
the cover (7) includes a cover body (72) including the exposing hole (70), and a partition (74) which protrudes from the cover body (72) toward the circuit board (111) to surround the exposing hole (70); and
the partition (74) includes a periphery (742) which is opposite from the cover body (72) and is in contact with the front surface (1111) of the circuit board (111).

3. The infrared detector (100) according to claim 2, further including a spacer (112) positioned between the infrared sensor (2, 21, 22) and the circuit board (111),
wherein the periphery (742) of the partition (74) includes a first region (7421) in contact with the front surface (1111) of the circuit board (111) and a second region (7422) in contact with the spacer (112).

4. The infrared detector (100) according to claim 2 or 3, wherein
the partition (74) includes an inclined part (744) which is inclined to come close to the infrared sensor (2, 21, 22) as it comes close to the circuit board (111) from the cover body (72).

5. The infrared detector (100) according to claim 4, wherein
the inclined part (744) is warped in a plane perpendicular to a direction coming close to the circuit board (111) from the cover body (72).

6. The infrared detector (100) according to any one of claims 1 to 5, wherein
the infrared transmitting member (3, 32) includes a front wall (322) in front of the infrared sensor (2, 22) and a side wall (323) protruding from an outer periphery of the front wall (322) toward the circuit board (111);
the cover (7) includes a wall part (782) which includes a first surface (7813) and a second surface (7814) which are continuous, the wall part (782) being in contact with the side wall (323) at the first surface (7813); and
the infrared transmitting member (3, 32) further includes a protruded part (325) which protrudes from the side wall (323) to be in contact with the second surface (7814) of the wall part (782).

7. The infrared detector (100) according to any one of claims 1 to 5, wherein:
the infrared transmitting member (3, 31) includes a front wall (312) in front of the infrared sensor (2, 21) and a side wall (313) protruding from an outer periphery of the front wall (312) toward the circuit board (111);
the side wall (313) includes an opening (3133) interconnecting an inner peripheral surface (3131) and an outer peripheral surface (3132), of the side wall (313);
the infrared transmitting member (3, 31) further includes a latching piece (34) protruding outward from part between opposite ends of a side of the opening (3133) adjacent to the front wall (312); and
the cover (7) further includes a wall part (781) which includes a space (7811) engaged with the latching piece (34) and is in contact with the outer peripheral surface (3132) of the side wall (313) to block the opening (3133), and a pair of protrusions (7812) which protrude from an edge of the space (7811) of the wall part (781) to be engaged into the opening (3133) to be positioned on opposite sides of the latching piece (34).

8. The infrared detector (100) according to any one of claims 1 to 7, wherein
the cover (7) further includes one or a plurality of flow channels (726, 7431) located outside the accommodation space (S10) and adjacent to the accommodation space (S10) to allow gas to flow therethrough in a thickness direction of the cover (7).

9. The infrared detector (100) according to claim 8, wherein
the plurality of flow channels (726, 7431) include a plurality of external flow channels (726) arranged to surround the accommodation space (S10).

10. The infrared detector (100) according to claim 8, wherein:
the cover (7) includes a dividing wall (743, 781) dividing the exposing hole (70) into a plurality of window sections (701, 702); and
the plurality of flow channels (726, 7431) include a plurality of internal flow channels (7431) formed in the dividing wall (743, 781).

11. The infrared detector (100) according to any one of claims 1 to 10, further comprising a plurality of the infrared sensors (2, 21, 22),
wherein all of the plurality of infrared sensors (2, 21, 22) are inside the accommodation space (S10).

12. The infrared detector (100) according to any one of claims 1 to 11, wherein
the infrared transmitting member (3, 31, 32) is placed not to change in a position relative to the circuit board (111).
